# EUROPEAN PATENT APPLICATION

(11) **EP 2 703 066 A1**
(43) Date of publication of application: **05.03.2014**
(21) Application number: 12776393.6
(22) Date of filing: 24.04.2012
(51) Int. Cl.: B01D 65/06, B01D 61/20, B01D 61/58, B01D 65/02, C02F 1/44

(54) **METHOD FOR CLEANING MEMBRANE MODULE**

(30) Priority: 25.04.2011 JP 2011096746
(71) Applicant: Toray Industries, Inc., Tokyo, 103-8666 (JP)
(72) Inventor: MAEDA, Tomohiro, Otsu-shi, Shiga 520-8558 (JP); TANIGUCHI, Masahide, Otsu-shi, Shiga 520-8558 (JP)
(74) Representative: Hoefer & Partner
(86) International application number: PCT/JP2012/060909
(87) International publication number: WO 2012/147715

(57) **Abstract**

In a method for cleaning a membrane module including at least one of a microfiltration membrane and an ultrafiltration membrane through which raw water is membrane-filtered to obtain membrane filtrate, for effectively cleaning a membrane module with reducing a drop in water recovery ratio and the cost of chemicals by preventing a chemical from leaking out to and remaining on the filtrated side of the membrane module after a cleaning step, a chemical diffusion step in which chemical-containing water is fed to a feed side of the membrane module and diffused from the feed side of the membrane module to a filtrated side of the membrane module is performed, and subsequently a backwashing step in which the membrane module is backwashed by allowing the membrane filtrate to flow from the filtrated side to the feed side of the membrane module is performed, in which, in the chemical diffusion step, an execution time of the chemical diffusion step is controlled based on a concentration of the chemical diffused to the filtrated side of the membrane module.

## Description

### TECHNICAL FIELD

The present invention relates to a method for cleaning a membrane module, which is conducted for an apparatus for producing fresh water in which raw water is membrane-filtrated with the membrane module including at least one of a microfiltration membrane and an ultrafiltration membrane to obtain membrane filtrate.

### BACKGROUND ART

In recent years, a membrane filtration method including separating and removing impurities in raw water by a membrane to convert the raw water to clarified water is continued to spread in water treatment applications such as water and sewage, and wastewater treatment. Substances to be removed by a membrane vary depending on the kind of a membrane. The substances to be removed generally include suspended substances, microorganisms, protozoa and colloidal substances in the cases of using microfiltration membranes (MF membranes) or ultrafiltration membranes (UF membranes), which are collectively referred to as "MF/UF membranes" hereafter. In the other cases of using reverse osmosis membranes (RO membranes) or nano-filtration membranes (NF membranes), which are collectively referred to as "semi-permeable membranes" hereafter, the substances to be removed include soluble organic matters, virus and ionic substances.

In the case of performing a filterimg operation of MF/UF membranes, amounts of humic substances, protein and like matter deposited on the surfaces of the membranes and in the membrane pores increase with continuation of the filtering operation, whereby a rise in transmembrane pressure is caused. Such a rise in transmembrane pressure has become a problem.

Under these circumstances, physical cleaning methods such as an air scrubbing method of vibrating membranes with air bubbles introduced to the feed sides of the membranes and bringing the membranes into contact with one another, thereby scraping off the substances attached to the membrane surfaces, and a backwashing of flowing under pressure a membrane filtrate or clarified water in a direction reverse to the filtration to the membrane and removing the substances attached to the membrane surface and in membrane pores, have been put to practical use. As examples of a cleaning method aimed at further enhancing cleaning effect, Patent Document 1 discloses the cleaning method of performing backwashing through the use of membrane filtrate to which an oxidizing agent such as sodium hypochlorite is added for the purpose of decomposing and removing organic matter, such as humic substances and proteins derived from microorganisms, having been deposited on the membrane surface and in the membrane pores, and Patent Document 2 discloses the cleaning method of forcing chlorine water to flow backward, from the filtrated side to the feed side, then keeping the chlorine water and membranes in contact with each other for a predetermined length of time, and thereafter discharging the chlorine water. In addition, Patent Document 3 discloses the cleaning method of feeding a chemical to the feed side of a membrane module and transmitting the chemical from the feed side to the filtrated side through the application of pressure. These cleaning methods, however, have faced problems of causing a drop in water recovery ratio and a rise in cost of chemicals. This is because an unreacted oxidizing agent remains inside the piping on the filtrated side after the cleaning step, and it becomes necessary to sufficiently flush the oxidizing agent out with membrane filtrate or to reduce and neutralize the oxidizing agent with a reducing agent such as sodium thiosulfate or sodium bisulfate.

### BACKGROUND ART DOCUMENT

### PATENT DOCUMENT

Patent Document 1: JP-A-2001-79366
Patent Document 2: JP-A-10-15365
Patent Document 3: JP-T-2008-539054 (the term "JP-T" as used herein means a published Japanese translation of a PCT patent application)

### SUMMARY OF THE INVENTION

### PROBLEMS THAT THE INVENTION IS TO SOLVE

An object of the invention is to provide a method for effectively cleaning a membrane module with reducing a drop in water recovery ratio and the cost of chemicals by preventing a chemical from leaking out to and remaining on the filtrated side of the membrane module after a cleaning step, in a membrane separation apparatus in which raw water is membrane-filtered by the membrane module.

### MEANS FOR SOLVING THE PROBLEMS

In order to solve the above-mentioned problem, the present invention relates to any of the following constitutions.
(1) A method for cleaning a membrane module including at least one of a microfiltration membrane and an ultrafiltration membrane through which raw water is membrane-filtered to obtain membrane filtrate, the method including:
   performing a chemical diffusion step in which chemical-containing water is fed to a feed side of the membrane module and diffused from the feed side of the membrane module to a filtrated side of the membrane module, and
   subsequently performing a backwashing step in which the membrane module is backwashed by allowing the membrane filtrate to flow from the filtrated side to the feed side of the membrane module,
   in which, in the chemical diffusion step, an execution time of the chemical diffusion step is controlled based on a concentration of the chemical diffused to the filtrated side of the membrane module.
(2) The method for cleaning a membrane module according to item (1), in which air scrubbing is performed in at least one part during feeding of the chemical-containing water to the feed side of the membrane module, in at least one part of the chemical diffusion step, or in both at least one part during the feeding of the chemical-containing water to the feed side of the membrane module and at least a part of the chemical diffusion step.
(3) The method for cleaning a membrane module according to item (1) or (2), in which raw water on the feed side of the membrane module is discharged before performing the chemical diffusion step.
(4) The method for cleaning a membrane module according to any of items (1) to (3), in which the chemical-containing water on the feed side of the membrane module is discharged before performing the backwashing step.
(5) The method for cleaning a membrane module according to any of items (1) to (4), in which the chemical-containing water discharged from the feed side of the membrane module is recovered and reused.
(6) The method for cleaning a membrane module according to any of items (1) to (5), in which the chemical-containing water is allowed to overflow by introducing in an amount larger than feed-side volume of the membrane module into the membrane module, and an overflow of the chemical-containing water is introduced again into the feed side of the membrane module.
(7) The method for cleaning a membrane module according to any of items (1) to (6), in which the chemical-containing water is heated.
(8) The method for cleaning a membrane module according to any of items (1) to (7), in which the membrane module is a membrane module in a membrane separation apparatus in which at least a part of the membrane filtrate from the membrane module is further separated into permeate and concentrate by membrane-filtering with a semi-permeable membrane unit.
(9) The method for cleaning a membrane module according to any of items (1) to (8), in which the chemical contains an oxidizing agent or a reducing agent.
(10) The method for cleaning a membrane module according to any of items (1) to (9), in which the execution time of the chemical diffusion step is controlled based on an oxidation-reduction potential value of water on the filtrated side of the membrane module during the chemical diffusion step.
(11) An apparatus for producing fresh water including:
   a membrane module including at least one of a microfiltration membrane and an ultrafiltration membrane through which raw water is membrane-filtered to obtain membrane filtrate ,
   a backwashing unit for feeding the membrane filtrate from a filtrated side of the membrane module to a feed side of the membrane module,
   a chemical feed unit for feeding a chemical to water to be fed to the feed side of the membrane module,
   a filtrate valve and a filtrate piping, provided on a piping on the filtrated side of the membrane module, with the filtrate valve being opened at the time of performing membrane filtration and closed at the time of performing backwashing,
   a backwashing valve and a backwashing water piping, provided on the filtrated side of the membrane module, with the backwashing valve being closed at the time of performing the membrane filtration and opened at the time of performing the backwashing,
   a chemical concentration measuring unit for measuring a chemical concentration on the filtrated side of the membrane module, provided on the piping on the filtrated side in a position nearer to the membrane module than the filtrate valve and the backwash valve, and
   a chemical diffusion step execution time control unit for controlling an execution time of the chemical diffusion step based on a measurement result of the chemical concentration.
(12) The apparatus for producing fresh water according to item (11), further including an air feed unit for feeding a gas to the feed side of the membrane module.
(13) The apparatus for producing fresh water according to item (11) or (12), further including a chemical-containing water heating unit for heating water to which the chemical is fed by the chemical feed unit and which is to be fed to the feed side of the membrane module.
(14) The apparatus for producing fresh water according to any of items (11) to (13), further including a chemical-containing water circulation line on the feed side of the membrane module.
(15) The apparatus for producing fresh water according to any of items (11) to (14), further including a semi-permeable membrane unit for treating at least a part of the membrane filtrate obtained by the membrane module.

### ADVANTAGE OF THE INVENTION

According to the invention, a chemical can be prevented from leaking out to and remaining on the filtrated side of a membrane module after cleaning step while reducing a drop in water recovery ratio and the cost of chemicals, whereby the membrane module can be cleaned effectively.

### BRIEF DESCRIPTION OF THE DRAWINGS

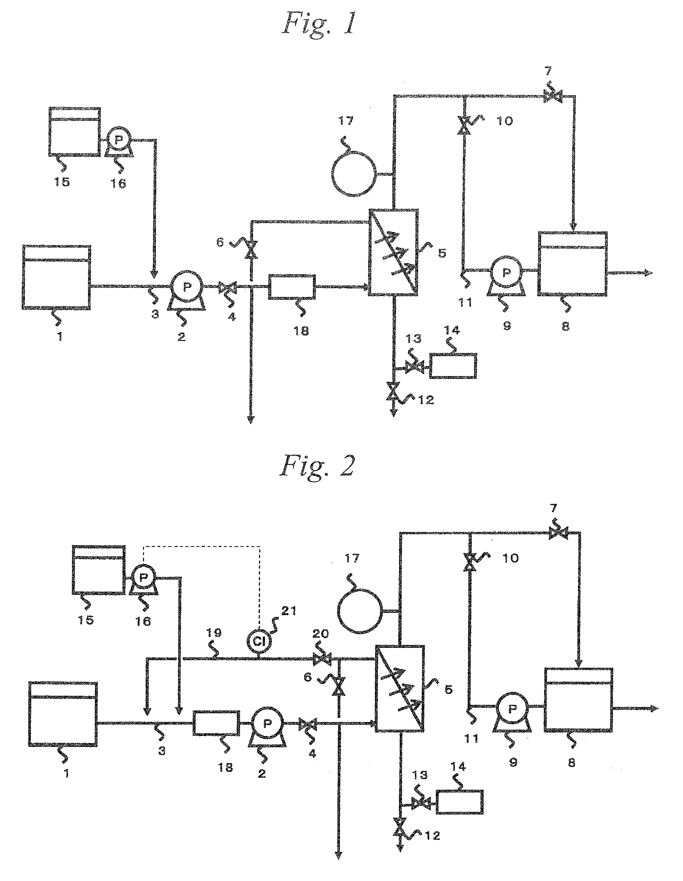

[Fig. 1] Fig. 1 is a schematic flow chart showing one embodiment of an apparatus for producing fresh water according to the invention, including a chemical concentration meter for measuring concentrations of a chemical in water on the filtrated side of a MF/UF membrane module during the chemical diffusion step.
[Fig. 2] Fig. 2 is a schematic flow chart showing one embodiment of an apparatus for producing fresh water according to the invention, including not only a chemical concentration sensor for measuring concentrations of a chemical in water on the filtrated side of a MF/UF membrane module during the chemical diffusion step but also a line through which chemical-containing water is circulated.

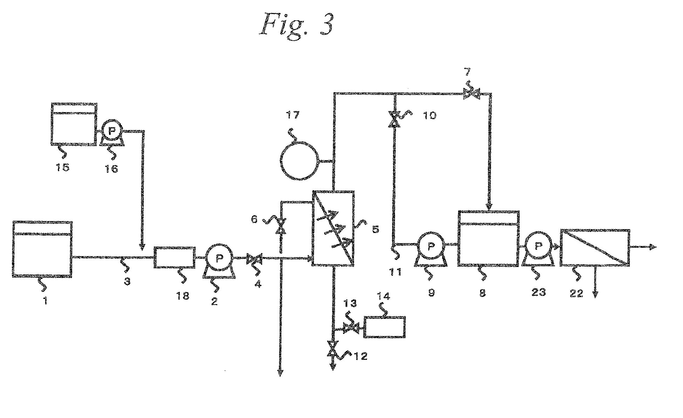

[Fig. 3] Fig. 3 is a schematic flow chart showing one embodiment of an apparatus for producing fresh water according to the invention, including not only a chemical concentration sensor for measuring concentrations of a chemical in water on the filtrated side of a MF/UF membrane module during the chemical diffusion step but also a semi-permeable membrane unit for separating membrane filtrate from the MF/UF membrane module into permeate and concentrate.

### MODE FOR CARRYING OUT THE INVENTION

Preferred embodiments of the invention are illustrated below through the use of drawings. However, the scope of the invention should not be construed as being limited to these embodiments.

An apparatus for producing fresh water according to the invention includes, as shown in Fig. 1, a raw water storing tank 1 for storing raw water, a raw water feed pump 2 for feeding raw water from the raw water storing tank 1, a raw water feed line 3 for feeding the raw water of the raw water storing tank 1 into the raw water feed pump 2, a raw water feed valve 4 which is opened during the feed of raw water, a MF/UF membrane module 5 through which raw water is filtered, an air vent valve 6 which is opened at the time of performing backwashing and air scrubbing, a filtrate valve 7 which is opened during the filtration, a filtrate storing tank 8 for storing MF/UF membrane filtrate, a backwashing pump 9 for backwashing the MF/UF membrane module 5 by feeding the MF/UF membrane filtrate, a backwashing valve 10 which is opened during the backwashing, backwash piping 11 for feeding the MF/UF membrane filtrate from the filtrate storing tank 8 into the MF/UF membrane module 5, a discharging valve 12 which is opened at the time of discharging raw water from the feed side of the MF/UF membrane module 5, an air valve 13 which is opened at the time of performing air scrubbing by supplying compressed air to a lower part of the MF/UF membrane module 5, a compressor 14 as a compressed air feed source, a chemical storing tank 15 for storing a chemical, a chemical feed pump 16 for feeding a chemical into raw water, a chemical concentration sensor I7 for measuring a chemical concentration of filtrate passed through the MF/UF membrane of the MF/UF membrane module 5 (water present on the filtrated side of the MF/UF membrane module) during the chemical diffusion step, and a heating device 18 provided for heating the chemical-containing water.

During a general filtration step in the apparatus for producing fresh water of the present invention, raw water stored in the raw water storing tank 1 is fed to the feed side of the MF/UF membrane module 5 by the raw water feed pump 2 under conditions that the air vent valve 6 and the raw water feed valve 4 are opened, and pressure filtration in the MF/UF membrane module 5 is performed by opening the filtrate valve 7 and closing the air vent valve 6. It is preferable that the filtration time is chosen as appropriate according to the water quality of raw water and filtration flux, but the filtration may also be continued until the time when attaining a predetermined transmembrane pressure.

After having performed the filtering operation for a predetermined time, the MF/UF membrane module 5 is periodically subjected to backwashing in which the membrane filtrate is allowed to flow backward, from the direction opposite to the direction of filtration. More specifically, the backwashing is performed by halting the raw water feed pump 2, closing the raw water feed valve 4 and the filtrate valve 7 and suspending the filtration step of the MF/UF membrane module 5, and then opening the air vent valve 6 and the backwashing valve 10 and bringing the backwashing pump 9 to operational status. After the completion of the backwashing step, the discharging valve 12 is opened, whereby water to be discharged in the MF/UF membrane module 5 is discharged. Thereafter, under conditions that the discharging valve 12 is closed and both the air vent valve 6 and the raw water feed valve 4 are opened, raw water is fed to the feed side of the MF/UF membrane module 5 by the raw water feed pump 2, and then the filtrate valve 7 is opened and the air vent valve 6 is closed. The apparatus for producing fresh water then returns to the general filtration step.

The backwashing of the MF/UF membrane module 5 is performed periodically in the course of continuing membrane filtration, and the frequency of performance of the backwashing is usually on the order of once in every 15 to 120 minutes. The backwashing time is not particularly limited, but is preferably chosen from the range of 5 to 120 seconds. This is because sufficient cleaning effect cannot be achieved when the duration of backwashing at a time is shorter than 5 seconds, while the availability rate of the MF/UF membrane module 5 becomes low when the duration of backwashing at a time is longer than 120 seconds. The backwashing flux is not particularly limited, but is preferably at least a half time as high as the filtration flux. This is because, when the backwashing flux is below a half time as high as the filtration flux, it is difficult to thoroughly remove contaminations deposited on the membrane surface and in pores. Although higher backwashing flux is preferred because it produces the higher cleaning effect, the backwashing flux is adjusted as appropriate to fall within the range where the MF/UF membrane module 5 does not suffer damage including module breakage, membrane rupture and the like.

In the method for cleaning a MF/UF membrane module 5 of the present invention, the MF/UF membrane module 5 undergoes the following treatment prior to the backwashing. Namely, the chemical diffusion step is performed which includes opening the air vent valve 6 and closing the filtrate valve 7 after performing the filtration operation for a predetermined time, continuing feeding a chemical in the chemical storing tank 15 to the raw water by the chemical feed pump 16, feeding the resulting water to the feed side of the MF/UF membrane module 5 by the raw water feed pump 2, and further, after the chemical-containing water is fed to the feed side of the MF/UF membrane module 5, halting both the raw water feed pump 2 and the chemical feed pump 16 and closing the raw water feed valve 4, thereby diffusing the chemical from the feed side to the filtrated side of the MF/UF membrane module 5. When the chemical concentration measured with the chemical concentration sensor 17 reaches a set value during performing the chemical diffusion step through the diffusion of the chemical from the feed side to the filtrated side of the membrane, the chemical diffusion step is brought to an end.

Incidentally, it is preferable that pressure other than head pressure is not imposed on the membrane during the chemical diffusion step.

The term diffusion as used herein means a physical phenomenon that ions, particles, heat and so on are spontaneously scattered and spread out due to a gradient, and the foregoing treatment allows the chemical ions fed to the feed side of the MF/UF membrane module 5 to pass through pores of the membrane and migrate to the filtrated side.

After the completion of the chemical diffusion step, the backwashing valve 10 is opened, the backwashing pump 9 is brought into operation, and the backwash step is performed using the MF/UF membrane filtrate. After the completion of the backwash step, the discharging valve 12 is opened, and the water to be discharged in the MF/UF membrane module 5 is discharged. Thereafter, raw water is fed to the feed side of the MF/UF membrane module 5 by the raw water feed pump 2 under conditions that the discharging valve 12 is closed and both the air vent valve 6 and the raw water feed valve 4 are opened, and then the filtrate valve 7 is opened and the air vent valve is closed. Therewith, the apparatus for producing fresh water generally returns to the filtration step, and the foregoing steps are repeated.

The amount of chemical-containing water fed to the feed side of the MF/UF membrane module 5 may be small because a chemical diffuses from the feed side to the filtrated side of the MF/UF membrane module 5 so long as the filtrated side of the membrane is filled with water. However, from the viewpoint of decomposing contaminants on the feed side of the MF/UF membrane module 5, it is preferred that the feed side of the MF/UF membrane module 5 is filled with the chemical-containing water.

From the viewpoint of making improvements in recovery of cleaning power and availability rate, the execution time of the chemical diffusion step is preferably adjusted according to the degree of contamination in the MF/UF membrane module 5. In the method for cleaning the membrane module of the present invention, the execution time of the chemical diffusion step is controlled based on a concentration of chemical in the MF/UF membrane filtrate, and the concentration is measured e.g. with the chemical concentration meter 17 provided on the filtrated side of the MF/UF membrane module 5. Specifically, the chemical-containing water fed to the feed side of the MF/UF membrane module 5 diffuses from the feed side to the filtrated side of the MF/UF membrane module 5 while decomposing contaminants. When the degree of contamination in the MF/UF membrane module 5 is high, much time is required for decomposition of contaminants, and the chemical cannot diffuse quickly from the feed side to the second side of the MF/UF membrane module 5. Consequently, it takes much time to attain a predetermined setting for the concentration of chemical in water on the filtrated side of the MF/UF membrane module 5, and the execution time of the chemical diffusion step becomes long. On the other hand, when the degree of contamination in the MF/UF membrane module 5 is low, the contaminants is quickly decomposed, and the chemical can diffuse smoothly from the feed side to the filtrated side of the MF/UF membrane module 5. Consequently, the concentration of chemical in water on the filtrated side of the MF/UF membrane module 5 reaches quickly a predetermined value, and the execution time of the chemical diffusion step becomes short.

In order to measure concentrations of the chemical diffused from the feed side to the filtrated side of the MF/UF membrane module 5 during the chemical diffusion step, the chemical concentration meter 17 is provided, as shown in Fig. 1, on the piping on the filtrated side of the MF/UF membrane module 5 in a position nearer to the MF/UF membrane module 5 than the filtrate valve 7 and the backwash valve 10.

The chemical to be used for the chemical diffusion step may be any of chemicals including an acid, an alkali, an oxidizing agent, a reducing agent, a chelating agent, a surfactant and so on, but inorganic chemicals are preferable to organic ones from the viewpoint of wastewater treatment.

The chemical concentration meter 17 is chosen appropriately in accordance with a chemical used. In the case of using a chlorine-based chemical, such as sodium hypochlorite or a chloramines, it is suitable to use as the chemical concentration sensor 17 a free chlorine concentration sensor or a chloramines concentration meter which utilizes a DPD method, a current method, an absorptiometric method or so on for making measurements. In the cleaning of the MF/UF membrane module 5, various kinds of chemicals are usable, but an acid, an alkali, an oxidizing agent or a reducing agent is generally used with high frequency, and pH or oxidation-reduction potential may therefore be adopted as an indicator of the chemical concentration. On the other hand, in the case of using an organic chemical, the total organic carbon (TOC) concentration may be adopted as an indicator of the chemical concentration.

In the case of using an acid as the chemical, the pH of membrane filtrate (water on the filtrated side of the MF/UF membrane) is measured with a pH meter, and the execution time of the chemical diffusion step can be controlled by pH values measured. It is appropriate in the case of using an acid as the chemical that the chemical diffusion step is performed until the value obtained by subtracting the pH of MF/UF membrane filtrate during the chemical diffusion step from the pH of chemical-containing water reaches 1 to 3, preferably 1 to 2. When the value obtained by subtracting the pH of MF/UF membrane filtrate during the chemical diffusion step from the pH of chemical-containing water is greater than 3, the chemical does not yet attain to its diffusion from the feed side to the filtrated side of the MF/UF membrane module 5, and continuation of the chemical diffusion step is therefore desired. On the other hand, when the value obtained by subtracting the pH of MF/UF membrane filtrate during the chemical diffusion step from the pH of chemical-containing water is smaller than 1, there is a concern of pH anomaly of the MF/UF membrane filtrate. On the other hand, when an alkali is used as the chemical, it is appropriate for the same reason as in the case of using an acid that the chemical diffusion step is performed until the value obtained by subtracting the pH of MF/UF membrane filtrate during the chemical diffusion step from the pH of chemical-containing water reaches 1 to 3, preferably 1 to 2.

As the acid, hydrochloric acid, sulfuric acid, nitric acid or the like can be used. And as the alkali, sodium hydroxide, potassium hydroxide or the like can be used. The concentration of acid or alkali in the chemical-containing water is preferably in a range of several tens of mg/L to several thousands of mg/L.

When an oxidizing agent or a reducing agent is used as the chemical, the oxidation-reduction potential (ORP) in membrane filtrate is measured with an oxidation-reduction potential (ORP) sensor, and the execution time of chemical diffusion step is controlled by the value of oxidation-reduction potential (ORP) obtained. In the case of using an oxidizing agent as the chemical, it is appropriate that the chemical diffusion step is performed until the oxidation-reduction potential (ORP) value of MF/UF membrane filtrate (water on the filtrated side of the MF/UF membrane) during the chemical diffusion step reaches 300 mV to 600 mV, preferably 300 mV to 400 mV. When the oxidation-reduction potential (ORP) value of MF/UF membrane filtrate is too low, contaminants on the surface and in the inside of the membrane are insufficiently decomposed by oxidation and the oxidizing agent does not yet attain to its diffusion from the feed side to the filtrated side of the MF/UF membrane module 5. It is therefore appropriate to continue the chemical diffusion step. On the other hand, too high an oxidation-reduction potential (ORP) value of MF/UF membrane filtrate results in the presence of a lot of residual oxidizing agent in the MF/UF membrane filtrate, and especially when a semi-permeable membrane unit is present in a later stage, there is a concern that oxidative degradation of the semi-permeable membrane might be caused by the residual oxidizing agent in the MF/UF membrane filtrate.

As the oxidizing agent, sodium hypochlorite, chlorine dioxide, hydrogen peroxide, chloramines or the like are usable, but sodium hypochlorite is preferred to the others in view of usability, cost and cleaning effect. The concentration of oxidizing agent in the chemical-containing water is preferably from 50 mg/L to 1,000 mg/L. This is because, when the oxidizing agent concentration is too low, the oxidizing agent is totally consumed during the retention in the MF/UF membrane module and sufficient cleaning effect cannot be produced; while, when the oxidizing agent concentration is too high, the cost of discharged water treatment becomes high.

As the reducing agent, sodium bisulfite, sodium thiosulfate, sodium sulfite or the like can be used. The concentration of reducing agent in the chemical-containing water is preferably from 50 mg/L to 1,000 mg/L. This is because, when the reducing agent concentration is too low, the reducing agent is totally consumed during the retention in the MF/UF membrane module and sufficient cleaning effect cannot be produced; while, when the reducing agent concentration is too high, the cost of discharged water treatment becomes high.

In the case of using an organic chemical, it is all right that the value of total organic carbons (TOC) in the membrane filtrate is measured with a total organic carbon (TOC) meter and the execution time of chemical diffusion step is controlled by the total organic carbon (TOC) value.

In the cleaning method of the present invention, it is appropriate, as shown in Fig. 1, to heat chemical-containing water to be fed to the MF/UF membrane module 5 by a heating device 18. At this stage, it is appropriate to adjust the temperature of chemical-containing water to fall within the range of 20°C to 40°C, preferably the range of 30°C to 40°C. When the temperature of the water is too low, decomposition of contaminants and diffusion from the feed side to the filtrated side in the MF/UF membrane module 5 do not proceed quickly. On the other hand, when the temperature of the water is too high, there are concern of membrane deformation by shrinkage and vaporization of oxidizing agents. In addition, when there is the possibility that temperature changes occur in the water under the influences of outside-air temperature and so on during the chemical diffusion step, it is appropriate that the chemical in the MF/UF membrane module 5 is subjected to temperature control during the chemical diffusion step.

In addition, from the viewpoint of scraping off contaminants floated to the membrane surface through the contact with the chemical, it is appropriate that air scrubbing is performed during the feeding of the chemical-containing water to the feed side of the MF/UF membrane module 5 or during at least a part in the chemical diffusion step. Of course, air scrubbing may be performed during both at least a part in the feeding of the chemical-containing water to the feed side of the MF/UF membrane module 5 and at least a part in the chemical diffusion step.

The air scrubbing is especially suitable for cases where contaminants are deposited and accumulated on the membrane surface. Specifically, the air scrubbing is performed by opening the air valve 13 and feeding compressed air in the compressor 14 to the feed side of the MF/UF membrane module 5, thereby vibrating the membrane. Higher pressure of the compressed air is preferable because effect of cleaning the membrane becomes the higher, but it is required to adjust the pressure as appropriate to fall within the range where the membrane suffer no damage.

Additionally, the air scrubbing may be performed in the middle of backwashing or after backwashing.

As shown in Fig. 2, it is also preferable that the apparatus for producing fresh water is further includes a chemical-containing water circulation line 19 through which the chemical-containing water overflowing from the MF/UF membrane module 5 is circulated. In such an apparatus for producing fresh water, the chemical-containing water is introduced in an amount larger than the feed-side volume of the MF/UF membrane module 5 into the feed side of the membrane module, and an overflow of the chemical-containing water is introduced again into the feed side of the MF/UF membrane module 5 via the chemical-containing water circulation line 19, thereby realizing circulation of chemical-containing water.

Cyclic washing with chemical-containing water may be performed without discharging the raw water on the feed side of the MF/UF membrane module 5, but in order not to dilute the chemical-containing water, the cyclic washing is preferably performed after discharging the raw water on the feed side of the MF/UF membrane module 5. In addition, the cyclic washing may be carried out in combination with air scrubbing.

It is favorable to circulate chemical-containing water in the foregoing way because the circulation makes it easy not only to adjust the temperature of the chemical-containing water to a constant temperature by a heating device 18 but also to hold the chemical concentration constant by replenishing the consumed chemical. In the case of using e.g. sodium hypochlorite, concentrations of free chlorine in circulated chemical-containing water are measured with a free chlorine meter 21 provided on the chemical-containing water circulation line 19, and the chemical in the chemical storing tank 15 can be fed appropriately by the chemical feed pump 16 so as to attain a predetermined concentration of free chlorine.

In the cleaning method of the present invention, from the viewpoint of causing no dilution in the chemical-containing water, it is favorable to discharge the raw water on the feed side of the MF/UF membrane module 5 prior to performing the chemical diffusion step.

In addition, from a viewpoint that the chemical is less prone to remain in the MF/UF membrane module 5, it is favorable to discharge the chemical-containing water on the feed side of the MF/UF membrane module 5 after the chemical diffusion step, and that before the backwash step. Herein, it is also favorable to recover the chemical-containing water discharged from the feed side of the MF/UF membrane module 5 and reuse the recovered chemical-containing water. It is also possible that the recovered chemical-containing water is once stored in a tank, and then used again for washing the MF/UF membrane module 5.

Instead of using a pressurized membrane module as shown in Fig. 1, there is nothing wrong with using, as the MF/UF membrane module 5 for use in the present invention, a submerged membrane module which is submerged in a tank filled with raw water and subjected to suction filtration with a pump, a siphon or the like. Additionally, the pressurized membrane module may be either an external pressure type or an internal pressure type, but the membrane module of an external pressure type is preferable in view of simplicity and easiness of pretreatment. The MF/UF membrane module 5 may be put into either a sideways position or an upright position, but the upright position is preferable in view of operability of air scrubbing.

Materials of the MF/UF membrane constituting the MF/UF membrane module 5 not particularly limited so long as the material forms a porous MF/UF membrane, but it is appropriate for the material to contain at least one kind selected from the group consisting of inorganic materials, such as ceramics, polyethylene, polypropylene, polyacrylonitrile, ethylene-tetrafluoroethylene copolymer, polychlorotrifluoroethylene, polytetrafluoroethylene, polyvinyl fluoride, tetrafluoroethylene-hexafluoroethylene copolymer, tetrafluoroethylene-perfluoroalkyl vinyl ether copolymer, chlorotrifluoroethylene-ethylene copolymer, polyvinylidene fluoride, polysulfone, cellulose acetate, polyvinyl alcohol, polyether sulfone and polyvinyl chloride. Among these materials, polyvinylidene chloride (PVDF) is more preferred in view of membrane strength and chemical resistance, and polyacrylonitrile is more preferred in view of high hydrophilicity and strong resistance to contamination. The pores of the MF/UF membrane surface have no particular limitation to their diameter, and the diameter thereof can be chosen as appropriate from a range of 0.001 µm to 10 µm, irrespective of whether the pores are present in a MF membrane or a UF membrane.

The MF/UF membrane has no particular restriction as to its shape, and therein are included a hollow fiber membrane, a flat membrane, a tubular membrane and a monolithic membrane and the like. Any of them can be used.

The filtration system may be either of two systems, a dead-end filtration system and a cross-flow filtration system, but the dead-end filtration system is preferred in view of low energy consumption.

Herein, the method for controlling a filtration flow rate in the apparatus for producing fresh water may be constant flow rate filtration, or it may be constant pressure filtration. However, in point of easiness with which the amount of filtrate produced can be controlled, the constant flow rate filtration is preferred.

The cleaning method of the present invention can also be suitable for performing in an apparatus for producing fresh water, as shown in Fig. 3, which has a semi-permeable membrane unit 22 on a downstream side of the MF/UF membrane module 5 and feeds MF/UF membrane filtrate into the semi-permeable membrane unit 22, thereby separating into permeate and concentrate. Additionally, in Fig. 3, the MF/UF membrane filtrate is fed to a high pressure pump 23 via an intermediate tank (a filtrate storing tank 8), but it is also all right that the MF/UF membrane filtrate is fed into the high pressure pump 23 without passing through the intermediate tank, and further fed into the semi-permeable membrane unit 22, thereby separating into permeate and concentrate.

The term " a semi-permeable membrane" as used herein means a membrane having semi-permeability, through which a part of component in a liquid mixture to be separated, e.g. a solvent, can permeate but the other components cannot permeate, with examples including nano-filtration membranes (NF membranes) and reverse osmosis membranes (RO membranes). As materials of such a membrane, polymeric materials including cellulose acetate-based polymers, polyamide, polyester, polyimide and vinyl polymers are frequently used. In the case where the structure of such a membrane is concerned, membranes usable as appropriate are e.g. an asymmetric membrane which has a dense layer on at least one side and has micropores whose diameters increase gradually toward the inside or the other side of the membrane from the dense layer, and a composite membrane having on the dense layer of an asymmetric membrane a very thin separation-functional layer formed from a different material. As to the membrane form, those membranes may be hollow fiber membranes or flat membranes. The invention can be implemented irrespective of material, structure and form of membranes, and can achieve effects on all of such membranes. Representatives of such membranes are e.g. cellulose acetate-based or polyamide-based asymmetric membranes and composite membranes having polyamide-based or polyurea-based separation-functional layers, but the use of cellulose acetate-based asymmetric membranes or polyamide-based composite membranes is preferred in view of the amount of fresh water generated, durability and salt removal ratio.

In the semi-permeable membrane unit 22, the filtrate from the MF/UF membrane module 5 is concentrated, and it is appropriate to prevent scale deposition from occurring through the concentration. For prevention of the scale deposition, it is effective to add a scale inhibitor to the filtrate from the MF/UF membrane module 5 and feed the resulting filtrate into the semi-permeable membrane unit 22. Incidentally, in the case of making adjustments to the pH on the downstream side of the MF/UF membrane module 5 and on the upstream side of the semi-permeable membrane unit 22, for the purpose of removal of boron and the like, addition of a scale inhibitor is preferably made on the side upstream from the pH adjustment so that the addition can achieve its effect. Additionally, it is also appropriate to prevent steep changes in concentration and pH in the vicinity of an opening for addition of a chemical (a scale inhibitor) by providing an in-line mixer just after the addition of the chemical or bringing the opening for addition of the chemical into directly contact with the stream of feed water.

Operating pressure of the semi-permeable membrane unit 22 is generally from 0.1 MPa to 15 MPa, and can be chosen as appropriate according to the kind of feed water, an operating method and the like. In the cases where water having low osmotic pressure, such as brine or ultrapure water, is used as feed water, the unit is operated under relatively low pressure, while the unit is operated under relatively high pressure in the cases of desalination of seawater, waste water treatment, recovery of valuable matter and the like.

In the present invention, the semi-permeable membrane unit 22 including a nano-filtration membrane or a reverse osmosis membrane has no particular restrictions, but for the purpose of making handling easy, it is appropriate to use a unit formed by packing a pressure-resistant container with fluid separation elements (elements) each containing in an enclosure a hollow fiber membrane form of semi-permeable membrane or a flat membrane form of semi-permeable membrane. In the case of forming each fluid separation element with a flat membrane, for example, the element is generally one formed by winding a cylindrical center pipe perforated with many pores with a semi-permeable membrane together with a spacer (net) in the form of a cylinder. Examples of a commercially available fluid separation element may include reverse osmosis membrane elements TM700 Series and TM800 Series manufactured by Toray Industries Inc. It is also favorable to construct a semi-permeable unit by using only one of those fluid separation elements or by connecting a plurality of them in series or parallel.

### EXAMPLES

The invention is illustrated below by reference to specific examples, but these examples should not be construed as limiting the scope of the invention in any way.

### <Example 1>

An apparatus for producing fresh water as shown in Fig. 1 was prepared by adopting as the MF/UF membrane module 5, one pressurized module (HFU-2020, manufactured by Toray Industries Inc.) having a membrane of 72 m², equipped with a hollow fiber UF membrane made from polyvinylidene fluoride having a molecular weight cutoff of 150,000 Da. In this apparatus, the raw water feed valve 4 and the filtrate valve 7 were opened, the raw water feed pump 2 was brought into operation and raw water having a turbidity of 5 degrees and a TOC (Total Organic Carbon) concentration of 2 to 10 mg/L was subjected to dead-end filtration at a filtration flux of 3.0 m/d.

After 30-minute filtration step in the course of the dead-end filtration, one-minute backwashing and one-minute air scrubbing of the MF/UF membrane module 5 were simultaneously conducted by closing the raw water feed valve 4 and the filtrate valve 7, halting the raw water feed pump 2, and simultaneously therewith by opening backwashing valve 10, the air valve 13 and the air vent valve 6, and bringing the backwashing pump 9 into operation. Additionally, in the backwashing, the membrane filtrate of the MF/UF membrane was used, the backwashing flux was adjusted to 3.3 m/d, and in the air scrubbing, 100 L/min of air was fed from a lower part of the membrane module. Thereafter, the backwashing valve 10 and the air valve 13 were closed, the backwashing pump 9 was brought to halt, and simultaneously therewith the discharging valve 12 was opened and the total amount of water in the MF/UF membrane module 5 was discharged outside the system. Then, the raw water feed valve was opened, the raw water feed pump 2 was brought into operation, whereby raw water was fed into the MF/UF membrane module 5, and thereafter the filtrate valve 7 was opened and the air vent valve 6 was closed. Thus, the operation was returned to the filtration step. And the washing step was repeated every 30-minutes filtration step.

Instead of the foregoing cleaning step, cleaning in which chemical-containing water prepared by adding a sodium hypochlorite solution in the chemical storing tank 15 to raw water was fed to the feed side of the MF/UF membrane module, the chemical was made to diffuse, and then the backwashing was performed, was performed for once in a day.

More specifically, once the raw water feed pump 2 was brought to halt, the filtrate valve 7 and the raw water feed valve 4 were closed, the filtration step in the MF/UF membrane module 5 was suspended, and then the air vent valve 6 and the discharging valve 12 were opened, whereby the water in the MF/UF membrane module 5 was discharged. Thereafter, the discharging valve 12 was closed and then, while a sodium hypochlorite solution in the chemical storing tank 15 was fed to raw water by the chemical feed pump 16 in a state that the air vent valve 6 and the raw water feed valve 4 were open, the resulting water was fed to the feed side of the MF/UF membrane module 5 by the raw water feed pump 2. Therewith, the amount of chemical added from the chemical feed pump 16 was adjusted as appropriate so that the concentration of free chlorine in the chemical-containing water was held at 500 mg/L. After the feed side of the MF/UF membrane module 5 had been filled with the chemical-containing water, the raw water feed pump 2 and the chemical feed pump 16 were brought to halt, the raw water feed valve was closed, and a chemical diffusion step in which the chemical was made to diffuse from the feed side to the filtrated side of the MF/UF membrane module 5 was performed. In the course of performing the chemical diffusion step, the step was halted at the instant when the free chlorine concentration reached 5 mg/L as measured with the free chlorine concentration meter 17 provided on the filtrated-side piping to the MF/UF membrane module 5. After the completion of the chemical diffusion step, the air vent valve 6 and the discharging valve 12 were opened, and the chemical in the MF/UF membrane module 5 was discharged. Thereafter, the discharging valve 12 was closed, the backwashing valve 10 was opened, the backwashing pump 9 was brought to operation, and backwashing was performed by using the filtrate of the MF/UF membrane. After the completion of the backwashing step, the discharging valve 12 was opened, and the water in the MF/UF membrane module 5 was discharged outside the system. Thereafter, raw water was fed to the feed side of the MF/UF membrane module 5 by the raw water feed pump 2 under conditions that the discharging valve 12 was closed and the air vent valve 6 and the raw water feed valve 4 were opened, then the filtrate valve 7 was opened and the air vent valve 6 was closed, and the apparatus for producing fresh water was thus returned to a general filtration step.

When the foregoing steps were repeated over a 3-month period, though TOC concentration of raw water fluctuated greatly in a range of 2 to 10 mg/L and the execution time of the chemical diffusion step fluctuated in a range of 5 to 60 minutes according to the fluctuation in the TOC concentration, the transmembrane pressure in the MF/UF membrane module 5 was 70 kPa just after going into operation, whereas it ranged between 90 kPa and 100 kPa during the period of operation. In this manner, the apparatus for producing fresh water was able to achieve stable operation.

### <Comparative Example 1>

An experiment was conducted under the same conditions as in Example 1, except that the time of submersion in the chemical (corresponding to the time of the chemical diffusion step in Example 1) was fixed to 10 minutes.

In the experiment, the transmembrane pressure in the MF/UF membrane module 5 was 70 kPa just after going into operation. And during an operation period when the TOC concentration of raw water was from 2 to 5 mg/L, the transmembrane pressure ranged between 90 kPa and 100 kPa in common with Example 1, and stable operation was successful. However, during an operation period when the TOC concentration of raw water was in a range of 5 to 10 mg/L, the transmembrane pressure was increased to 180 kPa in a brief period of 10 days, and the operation was forced to stop.

### DESCRIPTION OF REFERENCE NUMERALS AND SIGNS

1: Raw water storing tank
2: Raw water feed pump
3: Raw water feed line
4: Raw water feed valve
5: MF/UF membrane module
6: Air vent valve
7: Filtrate valve
8: Filtrate storing tank
9: Backwashing pump
10: Backwashing valve
11: Backwashing piping
12: Discharging valve
13: Air valve
14: Compressor
15: Chemical storing tank
16: Chemical feed pump
17: Chemical concentration meter
18: Heating device
19: Chemical-containing water circulation line
20: Chemical-containing water circulation line selection valve
21: Free chlorine meter
22: Semi-permeable membrane unit
23: High pressure pump

## Claims

1. A method for cleaning a membrane module comprising at least one of a microfiltration membrane and an ultrafiltration membrane through which raw water is membrane-filtered to obtain membrane filtrate, the method comprising:
performing a chemical diffusion step in which chemical-containing water is fed to a feed side of the membrane module and diffused from the feed side of the membrane module to a filtrated side of the membrane module, and
subsequently performing a backwashing step in which the membrane module is backwashed by allowing the membrane filtrate to flow from the filtrated side to the feed side of the membrane module,
wherein, in the chemical diffusion step, an execution time of the chemical diffusion step is controlled based on a concentration of the chemical diffused to the filtrated side of the membrane module.

2. The method for cleaning a membrane module according to claim 1, wherein air scrubbing is performed in at least one part during feeding of the chemical-containing water to the feed side of the membrane module, in at least one part of the chemical diffusion step, or in both at least one part during the feeding of the chemical-containing water to the feed side of the membrane module and at least a part of the chemical diffusion step.

3. The method for cleaning a membrane module according to claim 1 or 2, wherein raw water on the feed side of the membrane module is discharged before performing the chemical diffusion step.

4. The method for cleaning a membrane module according to any of claims 1 to 3, wherein the chemical-containing water on the feed side of the membrane module is discharged before performing the backwashing step.

5. The method for cleaning a membrane module according to any of claims 1 to 4, wherein the chemical-containing water discharged from the feed side of the membrane module is recovered and reused.

6. The method for cleaning a membrane module according to any of claims 1 to 5, wherein the chemical-containing water is allowed to overflow by introducing in an amount larger than feed-side volume of the membrane module into the membrane module, and an overflow of the chemical-containing water is introduced again into the feed side of the membrane module.

7. The method for cleaning a membrane module according to any of claims 1 to 6, wherein the chemical-containing water is heated.

8. The method for cleaning a membrane module according to any of claims 1 to 7, wherein the membrane module is a membrane module in a membrane separation apparatus in which at least a part of the membrane filtrate from the membrane module is further separated into permeate and concentrate by membrane-filtering with a semi-permeable membrane unit.

9. The method for cleaning a membrane module according to any of claims 1 to 8, wherein the chemical contains an oxidizing agent or a reducing agent.

10. The method for cleaning a membrane module according to any of claims 1 to 9, wherein the execution time of the chemical diffusion step is controlled based on an oxidation-reduction potential value of water on the filtrated side of the membrane module during the chemical diffusion step.

11. An apparatus for producing fresh water comprising:
a membrane module comprising at least one of a microfiltration membrane and an ultrafiltration membrane through which raw water is membrane-filtered to obtain membrane filtrate,
a backwashing unit for feeding the membrane filtrate from a filtrated side of the membrane module to a feed side of the membrane module,
a chemical feed unit for feeding a chemical to water to be fed to the feed side of the membrane module,
a filtrate valve and a filtrate piping, provided on a piping on the filtrated side of the membrane module, with the filtrate valve being opened at the time of performing membrane filtration and closed at the time of performing backwashing,
a backwashing valve and a backwashing water piping, provided on the filtrated side of the membrane module, with the backwashing valve being closed at the time of performing the membrane filtration and opened at the time of performing the backwashing,
a chemical concentration measuring unit for measuring a chemical concentration on the filtrated side of the membrane module, provided on the piping on the filtrated side in a position nearer to the membrane module than the filtrate valve and the backwash valve, and
a chemical diffusion step execution time control unit for controlling an execution time of the chemical diffusion step based on a measurement result of the chemical concentration.

12. The apparatus for producing fresh water according to claim 11, further comprising an air feed unit for feeding a gas to the feed side of the membrane module.

13. The apparatus for producing fresh water according to claim 11 or 12, further comprising a chemical-containing water heating unit for heating water to which the chemical is fed by the chemical feed unit and which is to be fed to the feed side of the membrane module.

14. The apparatus for producing fresh water according to any of claims 11 to 13, further comprising a chemical-containing water circulation line on the feed side of the membrane module.

15. The apparatus for producing fresh water according to any of claims 11 to 14, further comprising a semi-permeable membrane unit for treating at least a part of the membrane filtrate obtained by the membrane module.
